(19)

**Europäisches Patentamt**
**European Patent Office**
**Office européen des brevets**

(11) **EP 1 427 215 B1**

(12) **EUROPEAN PATENT SPECIFICATION**

(45) Date of publication and mention
of the grant of the patent:
**21.02.2007 Bulletin 2007/08**

(51) Int Cl.:
*H04N 7/30* (2006.01)   *H04N 7/36* (2006.01)
*H04N 7/50* (2006.01)

(21) Application number: **03257350.3**

(22) Date of filing: **21.11.2003**

(54) **Method and device for smoothing of image data**

Verfahren und Vorrichtung zur Bilddateienglättung

Procédé et appareil pour le lissage de données d'image

(84) Designated Contracting States:
**DE FR GB**

(30) Priority: **26.11.2002 JP 2002342599**

(43) Date of publication of application:
**09.06.2004 Bulletin 2004/24**

(73) Proprietor: **Pioneer Corporation**
**Meguro-ku,**
**Tokyo (JP)**

(72) Inventor: **Hashimoto, Kazunori**
**Pioneer Corporation**
**Tokyo (JP)**

(74) Representative: **Haley, Stephen**
**Gill Jennings & Every LLP**
**Broadgate House**
**7 Eldon Street**
**London EC2M 7LH (GB)**

(56) References cited:
**EP-A- 0 714 209**      **EP-A- 1 113 674**
**WO-A-00/19726**      **US-A- 4 296 436**
**US-A- 5 237 413**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a smoothing process of image data in connection with compression coding of image data.

Generally, since moving picture information has a massive data quantity, a huge quantity of storage capacity is needed to store the moving picture information as it is in a storage medium. Therefore, there is known a technique for compression coding of an image so that moving picture data can be stored in a recording medium such as an optical disc. As a method of compression coding of moving picture, MPEG (Moving Picture Experts Group) is known as a representative example.

Compression coding system such as MPEG is a compression method of performing discrete cosine-transformation (DCT) and quantization of original image data, for each block of a predetermined number of picture elements (pixels) (such as $8 \times 8$ pixels), to eliminate a high-frequency component of original image data. Thus, at the time of compressing the original image data to a low bit rate, block noise appearing like borderlines of the blocks may occur in each block. The block noise remarkably occurs when the original image data subjected to the compression coding (hereafter, it is called "original image data") has large high-frequency components.

In order to eliminate such block noise, a filtering which utilizes a prefilter is executed as preparation of compression coding such as the MPEG. The pre-filter is a sort of smoothing filter. The pre-filter is utilized for the purpose of reducing the block noise in the compression coding such as the MPEG by eliminating the high-frequency component existing in the original image data in advance. Generally, the prefilter eliminates the high-frequency component of the original image data by averaging luminance values of pixels constituting the image data with the smoothing filter of a predetermined size (pixel number). This method is disclosed in Japanese Patent No. 3280211.

However, since most known prefilters are two-dimensional filters of static operation and smoothing processing is uniformly executed irrespective of the varieties and features of the original image data subjected to the filtering, deficiency may occur in the image data after the smoothing processing. The original image data subjected to the smoothing processing may include 60-field image data, 30-frame image data, and 2-3 pull-down image data. A 60-field image data, in which one second consists of 60 fields, is the image data whose image components are different in each field. A 30-frame image data, in which one second consists of 30 frames, is the image data whose image components of two field images constituting one frame are identical and which becomes a still picture if the images are displayed as one frame. A 2-3 pull-down image is the 60-field image which is generated by converting the image of 24-frame per second, such as a movie.

Like this, since there are several kinds of original image data, the deficiency may occur in the processed image data conversely if the smoothing process is uniformly executed by a static prefilter. For example, if the field image data (60-field per second) is smoothed with the prefilter which executes the smoothing process in a frame unit, two very different field images are smoothed due to the combination of two field images constituting one frame, and the image data after the smoothing process may be quite different from the original image data. If the frame image data (30-frame per second) is smoothed with the prefilter executing the smoothing process in a field unit, the deficiency such as a striped pattern may occur, because a smoothing result is different for each field due to the difference of the image at a line level in some image contents.

US-A-4296436 (Figures 2,5), EP-A-1113674 all disclose smoothing processors for (Figures 2,5), and EP-A-0991270 (Figures 10, 12, 13, 17, 18) smoothing image data.

The present invention has been achieved in order to solve the above problems. It is an object of this invention to provide a smoothing processor which is capable of appropriately reducing noise components of original image data by a simple configuration and algorithm, irrespective of the sorts of the original image data.

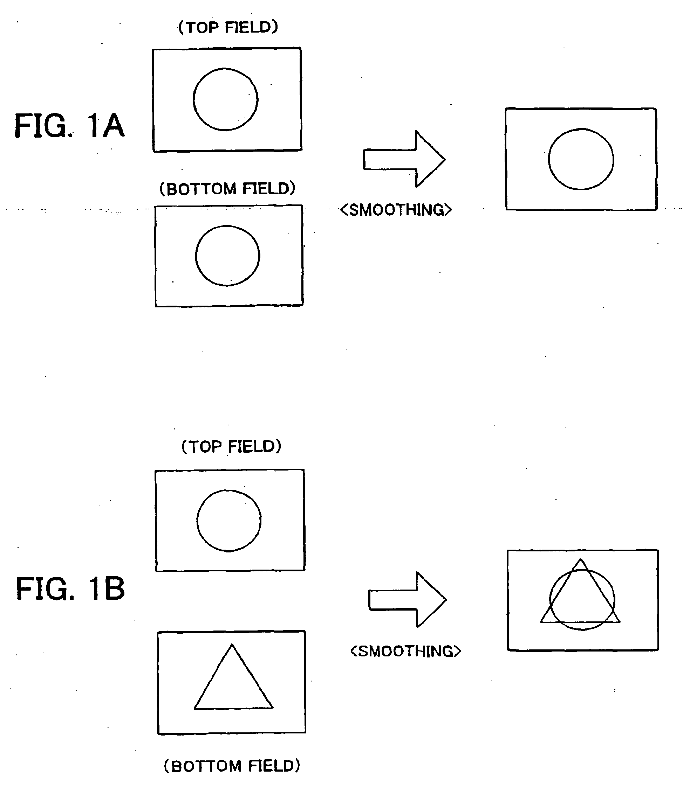

First of all, a basic technique of the present invention will be explained. As preparation of compression coding such as the MPEG, smoothing is executed by a prefilter to eliminate noise component, as described above. There are various kinds of original image data subjected to the smoothing by a prefilter, such as above-mentioned 60-field image data and 30-frame image data. If the smoothing is executed to a combination of two fields successive in time, an adverse effect such as a change of the image components may occur. For example, in the case of the 30-frame image data, the smoothing processing is appropriately executed as shown in FIG. 1A and unnecessary noise is eliminated when a top field image and a bottom field image match with each other. However, for example, in cases of 2-3 pull-down image data and an image whose orders of fields are reverse (image data of a type of which one frame image is constituted by a bottom field and a next top field), the images whose image components are different may be disadvantageously smoothed as illustrated in FIG. 1B.

According to the present invention, first of all, a field/frame determination process is executed in order to choose an appropriate combination of two field images subjected to the smoothing. Generally, one frame of image data js constituted by two fields. Those two field images are called "top field" and "bottom field". Namely, the one frame image is constituted by the combination of one top field and one bottom field. It is noted that the top field and the bottom field are also expressed as "ODD field" and "EVEN field", or "first field" and "second field" in a usual image signal. However, it depends on a concrete format of the signal which one of the top field and the bottom field each of the ODD/EVEN or first/second fields corresponds to.

When considering smoothing a certain field image, the combination of the field images can be made, whichever may be chosen in two field images before and after, in time, the certain field image. Namely, provided that the n-th top field image is smoothed, the combinations of the field images subjected to the smoothing process can be the combination of (1) the n-th top field and the n-th bottom field, or (2) the n-th top field and the (n-1)-th bottom field. According to the present invention, the smoothing process is executed by choosing one of those two combinations that has smaller difference in the image components. Therefore, the deficiency that the field images are smoothed by the combination having large difference of image components can be reduced.

Further, when smoothing is executed to the combination of two field images determined in the above-mentioned manner, the image area of the field image is divided into a plurality of small areas (blocks), and the smoothing process is executed by the unit of the block. At that time, the smoothing is executed by the frame unit for the area in which the image components of two field images are less different, and the smoothing is executed by the field unit for the area in which the image components of two field images are more different. "Executing the smoothing by the frame unit" means that the smoothing process is executed between neighboring lines in the frame image. "Executing the smoothing by the field unit" means that the smoothing is executed between the neighboring lines in a field image (in a case of the frame image, between the lines jumping over one line). The above process is executed for each block. Thus, when one field image is smoothed, the smoothing is executed in the identical field in the small area (block) having large motion in the image, and the smoothing is executed between the neighboring fields in the small area (block) having small motion. Therefore, by considering whether the image components of the image data subjected to the smoothing changes largely or not, the smoothing can be executed by an appropriate method for each block.

A smoothing processor of image data according to one aspect of the present invention includes a data obtaining unit which obtains the image data including a plurality of unit image data arranged in time series, a determining unit which determines a difference between object unit image data which is subjected to processing and preceding unit image data which is immediately before the object unit image data and a difference between the object unit image data and subsequent unit image data which is immediately after the object unit image data, for a plurality of blocks constituting the unit image data, and a smoothing unit which executes smoothing by utilizing the object unit image data and one of the preceding unit image data and the subsequent unit image data having smaller difference, based on a determination result by the determining unit.

According to one feature of the present invention, the image data in which a plurality of object unit image data such as field images are arranged in a time series is supplied from an image source. The object unit image data is divided into blocks of a predetermined size. The difference between the object unit image data and the preceding unit image data which is immediately before the object unit image data, and the difference between the object unit image data and the subsequent unit image data which is immediately after the object unit image data are determined for each block. The difference of the obj ect unit image data is the difference of the image data components. Concretely, the difference may be the difference of pixel values constituting the image data. The object unit image data is smoothed with one of the preceding unit image data and the subsequent unit image data, whose difference is smaller. Therefore, the object unit image data is always smoothed with the object unit image data whose difference is the smallest, so an adverse effect caused by the smoothing can be prevented, and at the same time, effective noise elimination can be performed

According to a feature of the above-mentioned smoothing processor, the determining unit may include a unit which determines whether or not the differences are equal to or larger than a predetermined value for each block and a unit which determines one of the preceding unit image data and the subsequent unit image data including less blocks whose difference is equal to or larger than the predetermined value, as the unit image data having smaller difference. In this feature, since the difference of the image data is determined for each block, and the number of blocks in which a larger difference than the predetermined value is found is determined as the unit image data of a larger difference, the unit image data whose difference is larger can be determined by a simple comparative process.

According to another feature of above-mentioned smoothing processor, the smoothing unit may execute smoothing by utilizing the object unit image data and the unit image data having smaller difference for the block whose difference is smaller than the predetermined value, and execute smoothing by utilizing only the object unit image data for the block whose difference is equal to or larger than the predetermined value.

In this feature, smoothing is executed in a different method for each block by taking account of the differences in the smoothing process. Namely, since smoothing is executed by only for the object unit image data in the block determined that the difference is large, the deficiency (i.e., the object unit image data in which the difference is large is smoothed) can be prevented. As to the block determined that the difference is small, since smoothing is executed utilizing two object unit image data, noise can be effectively eliminated.

According to another aspect of the present invention, a smoothing processing method of the image data including the identical process with the above-mentioned smoothing processor may be provided. Moreover, the process by the above-mentioned smoothing processor may be realized in a form of a smoothing process program to be executed on a computer.

The nature, utility, and further features of this invention will be more clearly apparent from the following detailed description with respect to preferred embodiment of the invention when read in conjunction with the accompanying drawings briefly described below.

**In the Drawings;**

FIGS. 1A and 1B are diagrams showing examples of images before and after a smoothing process.

FIG. 2 is a block diagram showing a schematic configuration of a compression coding system of image data to which a smoothing filter according to the present invention is applied.

FIGS. 3A and 3B are diagrams showing combination examples of frame images subj ected to a frame/field determination process.

FIG. 4 is a diagram showing a calculating method of a frame accumulation sum in a block unit in a frame/field determination process.

FIGS. 5A and 5B are diagrams showing calculating methods of a field accumulation sum in a block unit in a frame/field determination process.

FIG. 6 is a diagram showing an example of a frame/field determination result about a frame image subj ected to processing.

FIGS. 7A to 7C show configurative examples of a smoothing filter utilized in a smoothing process.

FIGS. 8A and 8B show configurative examples of a Sobel filter utilized in a smoothing process.

FIG. 9 is a flow chart of a prefiltering process executed by the system shown in FIG. 2.

FIG. 10 is a flow chart of a frame/field determination process in FIG. 9.

FIG. 11 is a flow chart of a smoothing process in FIG. 9.

The preferred embodiments of the present invention will now be described below with reference to the attached drawings. It is noted that the embodiment below indicates an example in which the present invention is applied to the prefilter utilized for preparation of the compression coding in an MPEG system.

[COMPRESSION CODING SYSTEM]

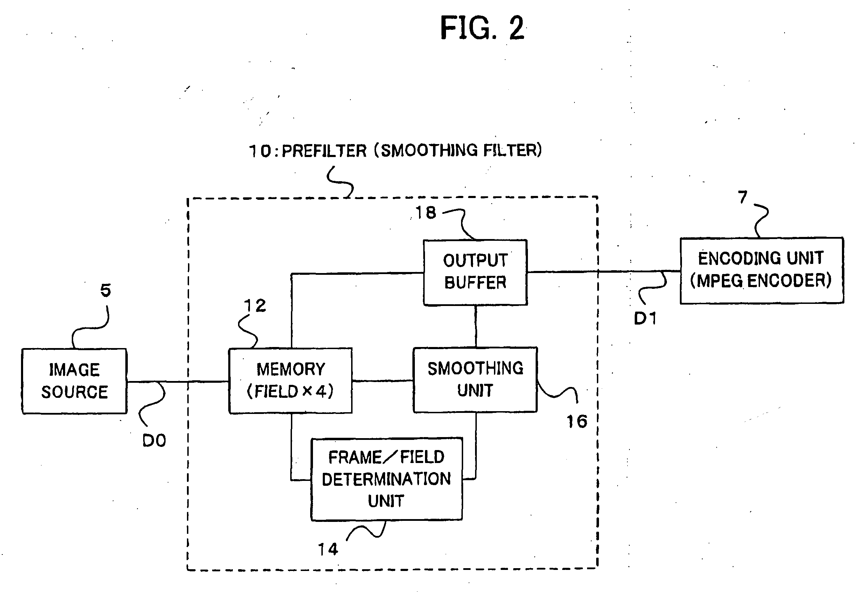

FIG. 2 schematically shows a configuration of the compression coding system of the image data to which the prefilter according to the present invention is applied. As shown in FIG. 2, an original image data D0 which is output from an image source 5 is supplied to a prefilter (smoothing filter) 10 of the present invention. It is noted that the image source 5 may be a storage medium such as various sorts of optical discs and a hard disk, and the original image data D0 may be various sorts of image data including the 60-field image data, the 30-frame image data and the 2-3 pull-down image data, as described.

The prefilter 10 executes appropriate smoothing to the original image data D0, and supplies the image data D1 after the smoothing process to an encoding unit 7. The encoding unit 7 may be an MPEG encoder, for example, which compression-codes the image data D1. Generally, in a case of the MPEG encoder, first of all, DCT is executed to the image data D1, and encoded image data is output after quantizing and coding. It is noted that the image data which is compression-coded in that way is utilized by being recorded in a recording medium such as an optical disc and by being transmitted via a transmission channel.

As shown in FIG. 2, the prefilter 10 includes a memory 12, a frame/field determination unit 14, a smoothing unit 16, and an output buffer 18. The memory 12 has storage capacity which corresponds to four pieces of the field image. The memory 12 reads in the original image data D0 by the unit of the field image and temporarily stores the data.

The frame/field determination unit 14 executes frame/field determination by utilizing the field images temporarily stored in the memory 12. The frame/field determination analyzes the components of the field images subjected to the determination and another field image. If the difference between those field images is smaller than a predetermined level, the frame/field determination determines that those two field images exist in a frame configuration. If the difference is larger than the predetermined level, the frame/field determination determines that those two field images exist in a field configuration. Though it is described in detail later, whether two field images are in the frame configuration or in the field configuration is determined for each block by dividing the image area into a plurality of blocks, and whether the whole field image is in the frame configuration or in the field configuration is determined based on the determination results of the plural blocks.

The smoothing unit 16 executes the smoothing process of the frame image constituted by the field image subjected to processing and another field image, by the unit of each pixel. The smoothing is the process of averaging each pixel value with the pixel values in a predetermined neighboring range, and the process is generally executed by utilizing the smoothing filter. According to a determination result by the frame/field determination unit 14, the smoothing unit 16 specifies the field image data subjected to smoothing. For each of the blocks of the field image data subjected to the smoothing, when it is determined by a frame/field determination process that the block is in the frame configuration, the smoothing is executed by the frame unit. When it is determined by the frame/field determination unit that the block is in the field configuration, the smoothing is executed by the field unit. The image data after the smoothing process, which is temporarily stored in the output buffer 18, is output to the encoding unit 7.

[PROCESS IN PREFILTER]

Next, a process in the prefilter 10 will be explained in detail.

(FRAME/FIELD DETERMINATION PROCESS)

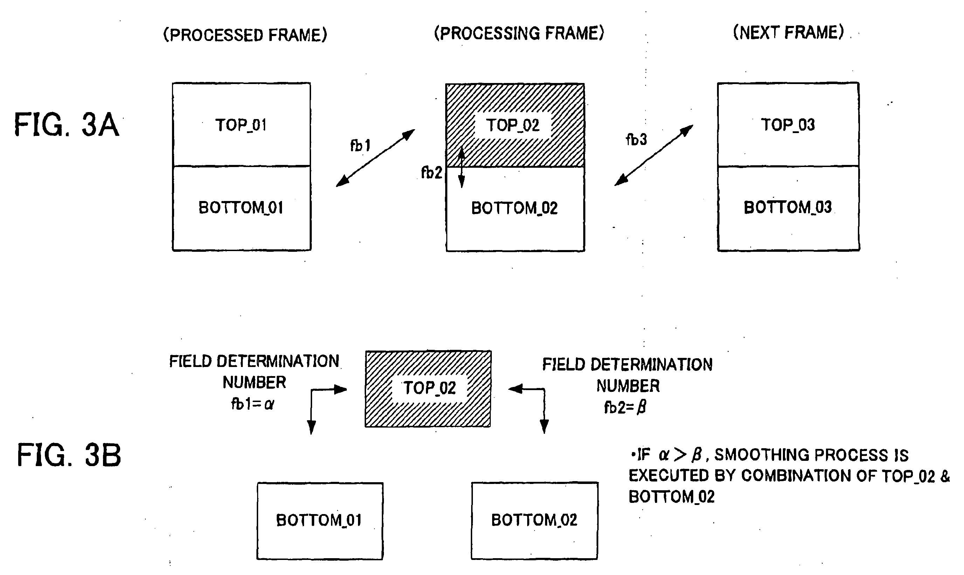

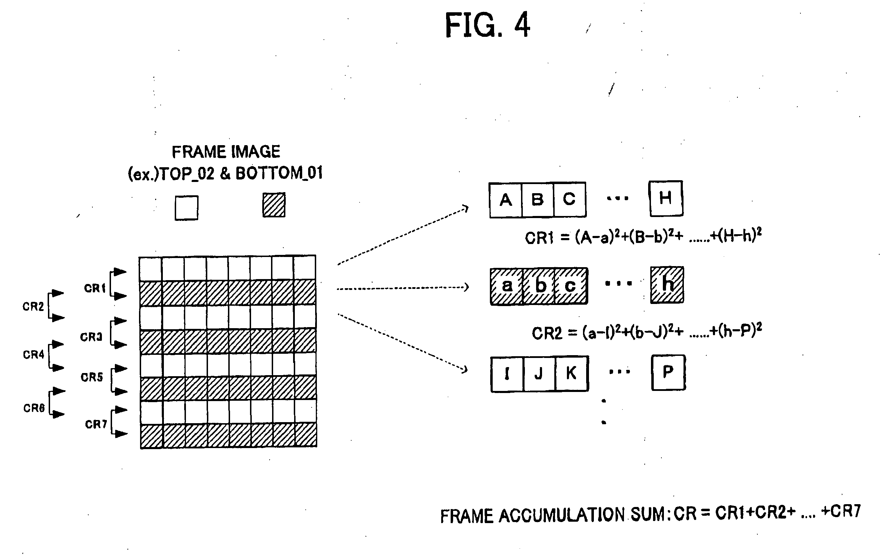

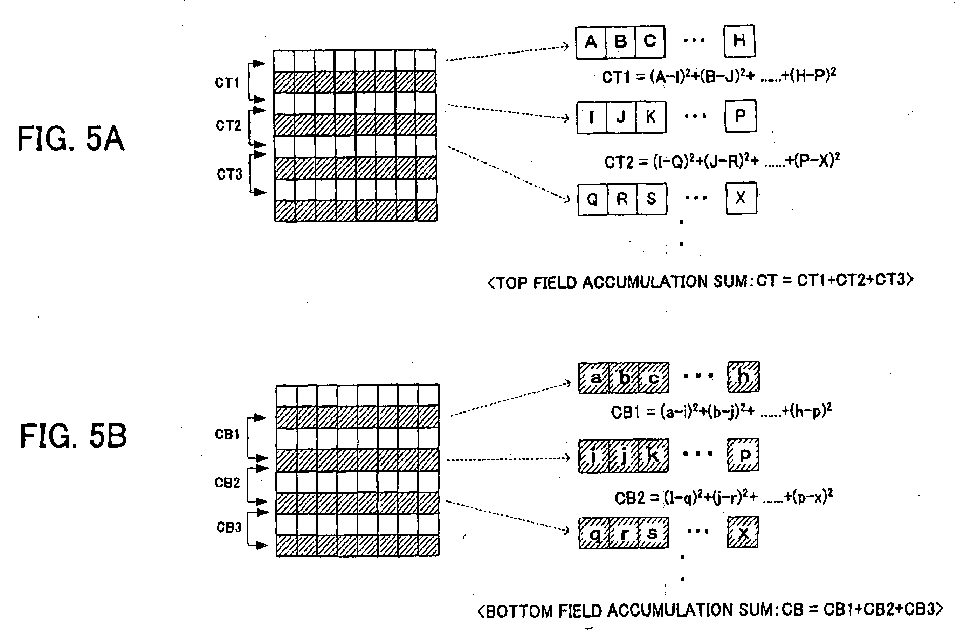

First of all, the frame/field determination process will be explained. FIG. 3A shows an example of the image data constituting the original image data. The original image data is basically the image data alternately including a top field image and a bottom field image, and one frame image is constituted by combining one top field image and one bottom field image. In the example of FIG. 3A, the original image data includes TOP_01, TOP_02, TOP_03, ... , as the top field image, and includes BOTTOM_01, BOTTOM_02, BOTTOM_03 , ... , as the bottom field image. From the image source 5, for example, the original image data D0 is supplied to the memory 12 of the prefilter 10 in the order of TOP_01, BOTTOM_01, TOP_02 and BOTTOM_02. The memory 12 has four field memories. At the first timing, the memory 12 retains four field images: TOP_01, BOTTOM_01, TOP_02 and BOTTOM_02. At the next timing, the memory retains BOTTOM_01, TOP_02, BOTTOM_02, and TOP_03. In that way, four field images which are successive in time are always retained in the memory 12, while updating one field image.
Now, it is assumed that the frame image subjected to the smoothing by the prefilter 10 is TOP_2 as shown in FIG. 3A. At this timing, four field images, which are BOTTOM_01, TOP_02, BOTTOM_02 and TOP_03, are retained in the memory 12. TOP_02 which is the field image subjected to the processing can constitute the frame image if combined with the preceding field image BOTTOM_01 or the field image BOTTOM_02. Namely, the smoothing of the field image TOP_02 subjected to the processing can be executed by either the frame image constituted by the field images TOP_02 and BOTTOM_01 (referred to as "the first combination") or the frame image constituted by the field images TOP_02 and BOTTOM_02 (referred to as "the second combination"). Therefore, the frame/field determination unit 14 determines which combination is appropriate.
The frame/field determination unit 14 divides each field image into 8x8-pixel blocks, and executes the frame/field determination for each block. FIG. 4 schematically shows one block of the frame image constituted by the field images TOP_02 and BOTTOM_01. A white square in FIG. 4 indicates one pixel of the top field image, and a hatched square indicates one pixel of the bottom field image. On the right side of FIG. 4, the pixel value (e.g., a luminance value) of each pixel within 3 lines from the top of the frame image is indicated in alphabets. The pixel values "A" to "P" are the pixel values of the field image TOP_02, and the pixel values "a" to "h" are the pixel values of the field image BOTTOM_01.
The frame/field determination unit 14 calculates a frame calculation value CR1 by an equation shown in FIG. 4 by utilizing the pixel values of the 1st and the 2nd lines of the frame image. Also, the frame/field determination unit 14 calculates a frame calculation value CR2 by utilizing the pixel values of the 2nd and 3rd lines of the frame image. By executing this process up to the combination of the 7th and 8th lines, the frame calculation values CR1 to CR7 are calculated, and a frame accumulation sum CR is calculated by summing the values. As understood by the equation in FIG. 4, the more similar the field images TOP_02 and BOTTOM_01 are, the smaller the value of the frame accumulation sum CR becomes. Conversely, the more different the field images TOP_02 and BOTTOM_01 are, the larger the value of the frame accumulation sum CR becomes.
Next, the frame/field determination unit 14 calculates the field accumulation sum as shown in FIGS. 5A and 5B. Concretely, first of all, as shown in FIG. 5A, as to the combinations of neighboring two lines out of 4 lines constituting the top field image TOP_02, top field calculation values CT1 to CT3 are calculated by the identical equation with the case of the frame calculation value, and the top field accumulation sum CT is obtained by summing the values. As understood by the equation, the more-similar-the pixel values of each line of the top field image TOP_02 are, the smaller the top field accumulation sum CT becomes. Conversely, the more different the pixel values of each line of the top field image TOP_02 are, the larger the top field accumulation sum CT becomes. However, since the top field accumulation sum CT compares the pixel values within the identical field image, the field accumulation sum CT tends to be smaller than the frame accumulation sum.
Next, the frame/field determination unit 14 calculates a bottom field accumulation sum CB by the identical process as shown in FIG. 5B. Concretely, since the frame image subjected to the processing is constituted by the combination of the field images TOP_02 and BOTTOM_01 according to this example, the bottom field accumulation sum CB is calculated by utilizing each pixel value of the bottom field image BOTTOM_01.
In that way, once the frame accumulation sum CR, the top field accumulation sum CT and the bottom field accumulation sum CB are obtained, the frame/field determination unit 14 executes the frame/field determination for each block. Concretely, first of all, by the equations below, the 1st and 2nd determination values are calculated, and it is determined whether conditional equations (1) and (2) shown below are satisfied or not.

$$\text{1st determination value} = |CR-2 \cdot CT| > 2000 \qquad (1)$$

$$\text{2nd determination value} = |CR-2 \cdot CB| > 2000 \qquad (2)$$

If both of the above-mentioned conditional equations (1) and (2) are satisfied, the frame/field determination unit 14 determines the block as a "field". Unless both of the conditional equations (1) and (2) are satisfied, the block is determined as a "frame".

As described above, the frame/field determination unit 14 executes the frame/field determination by the unit of the block. When the original image data has $720 \times 480$ pixels, 5400 blocks of $8 \times 8$ pixel are included in one frame image, and the frame or field determination is executed for each block. Then, the frame/field determination unit 14 calculates, as a field determination number fb1, the number of the blocks which are determined as "field".

Next, the frame/field determination unit 14 executes the identical process to the other combination of the field images including the field image TOP_02 subjected to the processing, i.e. , the combination of the field images TOP_02 and BOTTOM_02, to calculate a field determination number fb2.

Next, the frame/field determination unit 14 determines which combination, i.e., the 1st or 2nd combination, should be utilized for the smoothing process, based on the field determination number. Concretely, the smoothing process is executed for the combination having a smaller field determination number. For example, as shown in FIG. 3B, when the field determination number fb1=$\alpha$ for the combination of the field images TOP_02 and BOTTOM_01 is larger than the field determination number fb2=$\beta$ for the combination of the field image TOP_02 and BOTTOM_02, it is determined that the smoothing process described later is executed for the combination of the field images TOP_02 and BOTTOM_02 . In this way, the frame/field determination unit 14 determines to constitute the frame image by one of 1st and 2nd combinations whose field determination number (i.e., a number of blocks determined as 'field') is smaller, i.e., by the combination having smaller differences between the field images, and to execute the smoothing. Thus, irrespective of the sorts of the original image data, the smoothing process can be always executed for an appropriate combination. As a result, it can be prevented that the smoothing process is executed for the combination of the field images having a larger difference.

(SMOOTHING PROCESS)

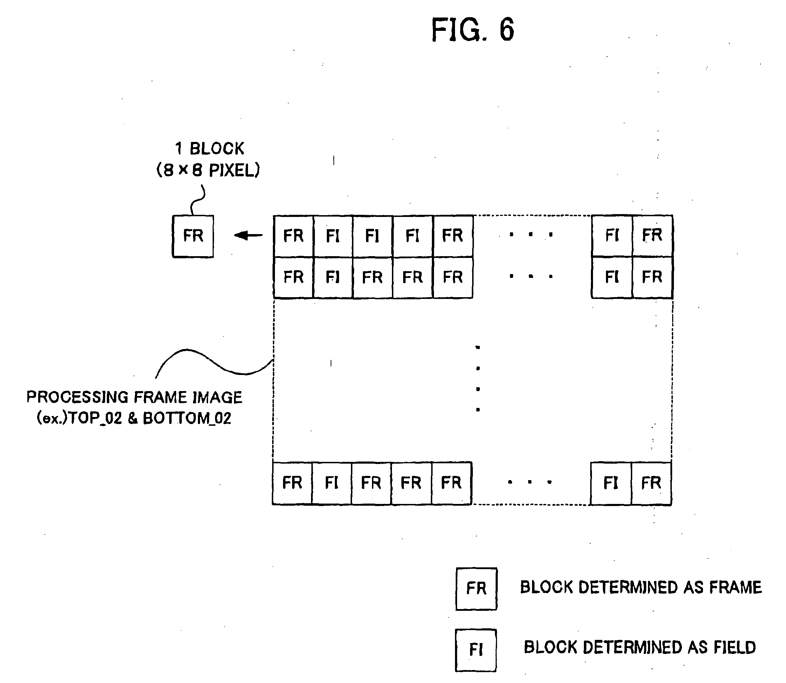

Next, the smoothing process will be explained. The smoothing process is executed for each pixel by the unit of block. FIG. 6 schematically shows the frame image subjected to the smoothing process. The frame image subjected to the smoothing process is the frame image constituted by the combination of the field images, which is determined as an object of the smoothing process by the above-mentioned frame/field determination process because the field determination number thereof is small. For example, in an example shown in FIG. 3A, the field image subjected to the processing is the top field image TOP_02, and it is determined by the frame/field determination process that the smoothing process is executed to the frame image constituted by the combination of the field images TOP_02 and BOTTOM 02 as shown in FIG 3B. Thus, in this case, the frame image constituted by the combination of the field images TOP_02 and BOTTOM_02 becomes the object of the smoothing process. (See FIG. 6)

In this way, to the frame image determined by the frame/field determination process, either of the smoothing by the frame unit or the smoothing by the field unit is applied by the unit of the block. The block in this case is the block prescribed in the frame/field determination process, and is the 8x8 pixel block as shown in FIGS. 4, 5A and 5B. By the frame/field determination process, as to the frame image subjected to the processing, the frame/field determination has been completed for each block. FIG. 6 shows an example of a determination result thereof. It is noted that the determination result may be stored in the memory 12 in the prefilter 10. In FIG. 6, the block indicated by "FR" is the block determined as the "frame", and the block indicated by "FI" is the block determined as the "field" by the frame/field determination process. In the smoothing process, by the unit of the block, the smoothing process by the frame unit is applied to the pixels in the block which is determined as the "frame", and the smoothing process by the field unit is applied to the pixels in the block which is determined as the "field".

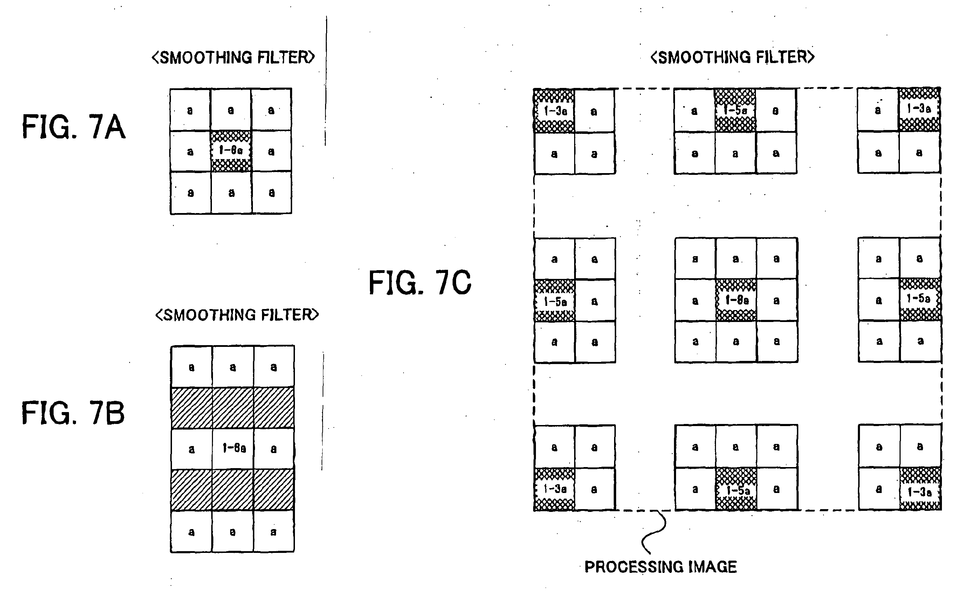

Next, the smoothing processes by the frame unit and by the field unit will be concretely explained. FIG. 7A shows a constructive example of the smoothing filter by the frame unit, and FIG. 7B shows a constructive example of the smoothing filter by the field unit. The smoothing filter is generally the filter which uniformly varies the pixel values of the surrounding pixels which surround the pixel subjected to the processing as a center. A factor "**a**" of the smoothing filter is also called "smoothing factor". Though the example shown in FIG. 7A is the smoothing filter of 3x3 pixel, smoothing filters, other than the $3\times3$ pixel filter, can be utilized.

In a case of the smoothing process by the frame unit, the smoothing process is executed for neighboring lines of the frame image subjected to the processing. Therefore, the smoothing filter by the frame unit executes filtering to 3 pixels in both vertical and horizontal directions of the frame image data.

On the other hand, in a case of the smoothing process by the field unit, the smoothing process is executed independently for each field. In an example of FIG. 6, since the field image subjected to the processing is TOP_02, the block determined as the "field" is smoothed by utilizing the pixel data of only the field image TOP_02. Since the smoothing filter by the field unit shown in FIG. 7B is, for ease of explanation, formed as the smoothing filter to be applied to the image data of a frame image state, i.e., a state in which two field images are combined, the hatched portions are not processed. So, substantially, the filter shown in FIG. 7B is the smoothing filter of 3x3 pixel by the field unit. It is noted that the smoothing filter shown in FIG. 7A may be utilized when the smoothing process is executed to the field image TOP_02 stored in the memory by a field image unit, in an actual process.

To the pixels at the periphery of the field image subjected to the processing, each smoothing filter having a configuration shown in FIG. 7C is utilized according to the location of the pixel subjected to the processing. It is noted that the smoothing filters for the periphery of the image shown in FIG. 7C are also applied to the image data in a frame state like in FIG. 7A. In a case of smoothing by the field unit, the filters for the periphery of the image has a configuration having pixel portions (the hatched pixels) which are not subjected to the smoothing like in FIG. 7B.

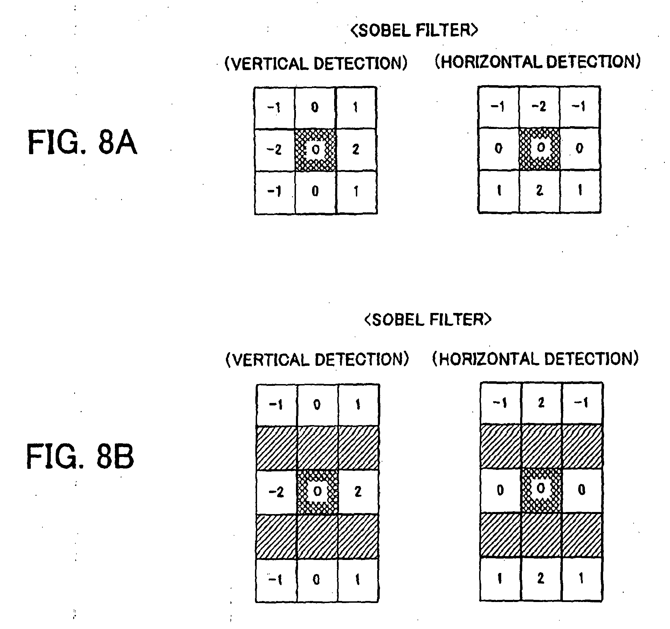

A borderline detection is executed by using a Sobel filter before the process by the smoothing filter, and hence the smoothing process is executed only for the pixels including no borderline. The reason thereof is that the outlines of letters and images of superimposition get out of shape if the smoothing process is uniformly executed to the outlines thereof. Therefore, the smoothing process is not applied to such a borderline portion so as to prevent the outlines thereof from getting out of shape. FIG. 8A shows a configurative example of the Sobel filter for the image data in the frame unit, and FIG. 8B shows a configurative example of the Sobel filter for the image data in the field unit. Concretely, the Sobel filter is applied to each pixel of the frame or field image subjected to the processing. As a result, when an obtained value is larger than a predetermined threshold, the pixel is determined to be located on the border. When the obtained value is smaller than the predetermined threshold, the pixel is determined not to be located on the border.

[PREFILTERING PROCESS]

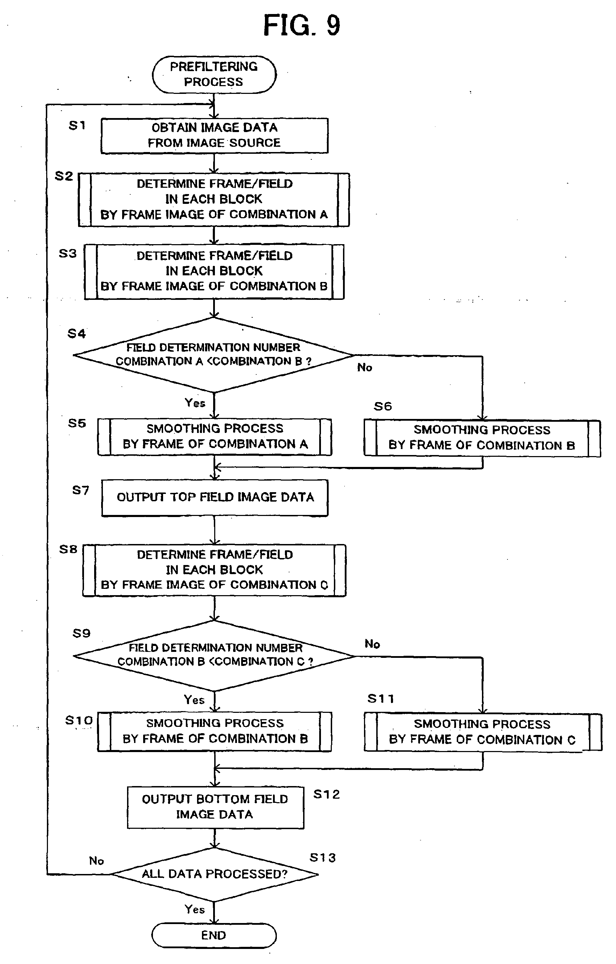

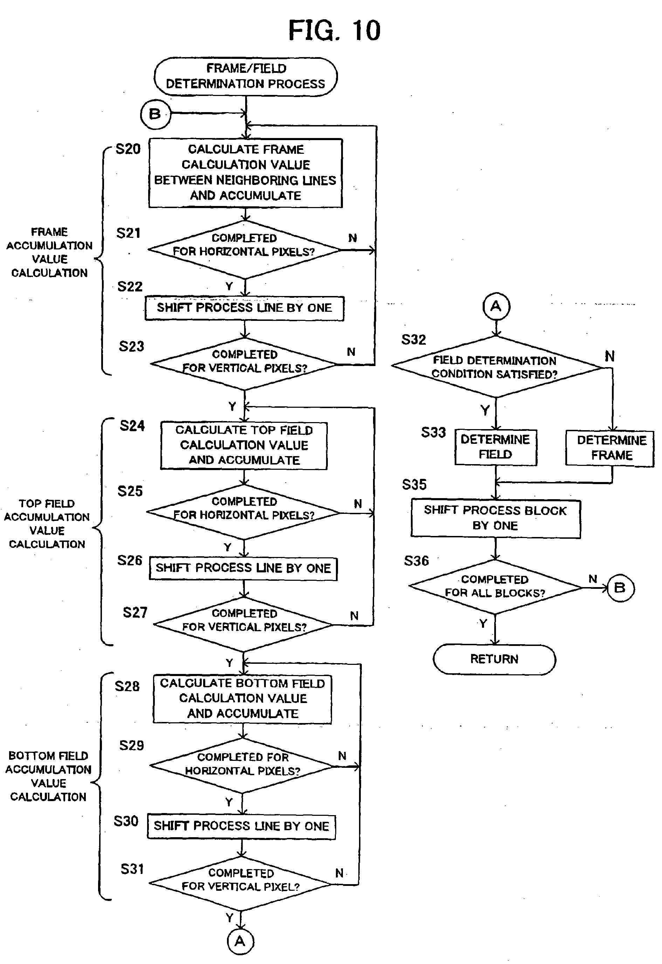

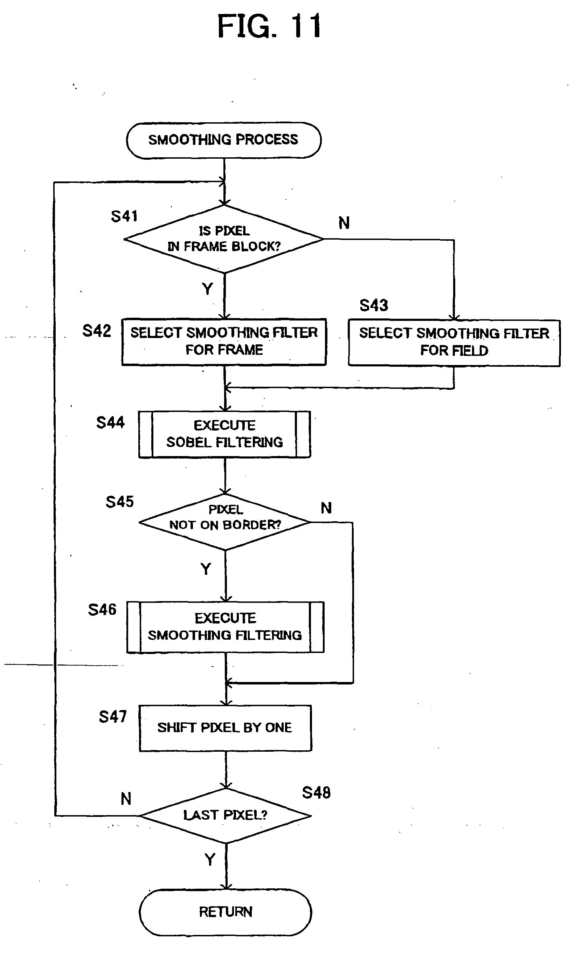

Next, a flow of a whole prefiltering process will be explained with reference to FIGS. 9 to 11. FIG. 9 is a flow chart of a main routine of the prefiltering process, FIG. 10 is a flow chart of the frame/field determination process, and FIG. 11 is a flow chart of the smoothing process.

First of all, with reference to FIG. 9, the prefilter 10 receives the original image data D0 from the image source 5 (step S1). The frame/field determination unit 14 executes the processing of top field image data. Namely, as shown in FIG. 3, the frame/field determination is executed to the frame image constituted by the combination of the top field image subjected to the processing (e.g., the top field image TOP_02) and the field image which is preceding to the top field image (e.g., the bottom field image BOTTOM_01), which is called "combination A" below (step S2). Thereby, the determination of frame or field is executed to the frame image of the combination A for each block, and the field determination number fb1 is obtained.

Next, the frame/field determination unit 14 executes the frame/field determination to the frame image constituted by the combination of the field image subj ected to the processing (e.g., the top field image TOP_02) and the field image corresponding to that image (e.g., the bottom field image BOTTOM_02), which is called "combination B" below (step S3). Thereby, the determination of frame or field is executed to the frame image of the combination B for each block, and the field determination number fb2 is obtained.

Next, the frame/field determination unit 14 compares the field determination numbers fb1 of the combination A and fb2 of the combination B (step S4), and determines the frame image of the combination having the smaller field determination number as the object of the smoothing process. Then, the smoothing unit 16 executes the smoothing process by utilizing the corresponding frame image (step S5 or S6), and outputs the image data after the smoothing process to the encoding unit 7 via the output buffer 18 (step S7).

Next, the prefilter 10 executes the processing of the bottom field image. For example, provided that the bottom field image BOTTOM_02 in FIG. 3A is subjected to the processing, the prefilter 10 determines one of the frame image constituted by the combination (combination B) of the top field image TOP_02 and the bottom field image BOTTOM_02 and the frame image constituted by the combination (it is called "combination C" below) of the top field image TOP_03 and the bottom field image BOTTOM_02, for which frame image the smoothing process should be executed. However, at this stage, since the frame/field determination for the frame image of the combination B has already been completed in step S3, only the frame/field determination for the frame image of the combination C is executed (step S8). Then, the frame/field determination unit 14 determines one of the frame images of the combinations B and C, having the smaller field determination number, as the object of the smoothing process (step S9). The smoothing unit 16 executes the smoothing process for the frame image (step S10 or S11), and outputs the image data obtained as a result to the encoding unit 7 via the output buffer 18 (step S12).

In this way, the prefilter 10 repeats the frame/field determination process and the smoothing process for the top field image and the bottom field image. When the process is completed for all the field image data in the original image data D0 (step S13; Yes), the prefiltering process ends.

Next, a flow of the frame/field determination process which is executed in steps S2, S3 and S8 will be explained with reference to FIG. 10. First, the frame accumulation sum is calculated, as shown in FIG. 10. Namely, as shown in FIG. 4, as to one block (8×8 pixel in this example), the frame calculation value CR1 is calculated by calculating squares of the differences of the pixel values corresponding to each other on the neighboring lines and by summing the squares for all the pixels in the horizontal direction of the block (steps S20 and S21). Then, by shifting the line of the processing by one (step S22), the frame calculation value CR2 is calculated by executing the identical process. If all the frame calculation values (CR1 to CR7 in the examples of FIG. 4) in one block are obtained (step S23; Yes) by repeating the process, the values are summed and the frame accumulation sum CR is calculated.

Next, as shown in FIG. 5A, the top field calculation value CT1, CT2, ... for each line are calculated for only the pixels corresponding to the top field of the block in the same way (steps S24 and S25), and the same calculation is executed for all lines in the vertical direction of the block (steps S26 and S27) to calculate the top field accumulation sum CT. Similarly, the bottom field calculation value CB1, CB2, ... for each line is calculated for only the pixels corresponding to the bottom field of the block (steps S28 and S29), and the same calculation is executed for all lines in the vertical direction of the block (steps S30 and S31) to calculate the bottom field accumulation sum CB. In this way, the frame accumulation sum CR, the top field accumulation sum CT and the bottom field accumulation sum CB are obtained for one block subjected to the processing. Next, the frame/field determination unit 14 determines whether the block satisfies the field determination conditions or not (step S32). Concretely, the frame/field determination unit 14 determines whether both of the above-mentioned conditional equations (1) and (2) are satisfied or not. If both of them are satisfied, the block is determined as the field (step S33). If at least one of the equations is not satisfied, the frame/field determination unit 14 determines the block as the frame (step S34). In this way, the frame/field determination for one block in the frame image subjected to the processing ends.

Hereafter, the frame/field determination unit 14 shifts the block by one, and determines the block as the frame or the field by the identical process. When the frame or field determination results for all the blocks included in the frame image subjected to the determination are obtained, the frame/field determination process ends.

Next, the smoothing process will be explained with reference to FIG. 11. The smoothing process is executed in a state in which the frame images respectively subjected to the processing are specified in step S5, S6, S10 or S11 in FIG. 9.

First, the smoothing unit 16 specifies one pixel in the frame image as the pixel subjected to the processing (hereinafter referred to as "process object pixel"), and determines whether the block to which the process object pixel belongs is the block determined as the frame or the field (step S41). Since the frame/field determination result of each block (see FIG. 6) is stored in the memory 12 in the prefilter 10 as described above, the smoothing unit 16 may refer to the result. When the process object pixel belongs to the block which is determined as the frame, the smoothing unit 16 chooses the smoothing filter by the frame unit as shown in FIG. 7A (step S42). When the process object pixel belongs to the block which is determined as the field, the smoothing unit 16 chooses the smoothing filter by the field unit as shown in FIG. 7B (step S43).

Next, the smoothing unit 16 executes the above-mentioned Sobel filtering (step S44), and determines whether the process object pixel is located on the border or not (step S45). When the process object pixel is located on the border, the smoothing unit 16 goes to step S47 without executing the smoothing process by the smoothing filter in order to prevent the problem that the letters and the outlines get out of shape by the smoothing process, as described above. On the other hand, when the process object pixel is not on the border, the smoothing process is executed by applying the smoothing filter which is chosen in step S42 or S43 (step S46).

Further, the smoothing unit 16 specifies the next process object pixel (step S47), and determines whether the next process object exists or not (step S48). In this way, the smoothing unit 16 executes the smoothing process, in turn, for all the pixels of the frame image subjected to processing, and the smoothing process ends when the process is completed for all the pixels (step S48).

[MODIFICATION]

In the above-mentioned embodiment, while the smoothing filter of the present invention is utilized as the prefilter which is applied as the preparation of a compression codingprocess by the MPEG, the smoothing filter of the present invention can also be applied to a general smoothing process of image. For example, the smoothing filter canbe installed in a general display to be used for noise elimination of a display image.

In the above-mentioned embodiments, while the smoothing is executed by prescribing the luminance value of the image data as the pixel value, not only the luminance but also chrominance can be smoothed in the identical method.

Also, the calculation equations of the frame accumulation sum and the field accumulation sum in the frame/field determination and the conditional equations (1) and (2) in the embodiment are only examples. So, the frame/field determination can also be executed by other calculation equation and conditional equation.

As described above, the smoothing processor according to the embodiment includes a memory which obtains and stores the image data including a plurality of unit image data arranged in time series; a frame/field determining unit which determines a difference between object unit image data which is subjected to processing and preceding unit image data which is immediately before the object unit image data and a difference between the object unit image data and subsequent unit image data which is immediately after the object unit image data, for a plurality of blocks constituting the unit image data; and a smoothing unit which executes smoothing by utilizing the object unit image data and one of the preceding unit image data and the subsequent unit image data having a smaller difference, based on a determination result by the determining unit.

In this configuration, the image data which includes a plurality of object unit image data arranged in time series, such as field images, is supplied from an image source. The object unit image data subjected to the smoothing process is divided into blocks of a predetermined size. Then, a difference between the object unit image data and preceding unit image data which is immediately before the object unit image data, and a difference between the object unit image data and subsequent unit image data which is immediately after the object unit image data are determined for a plurality of blocks, based on a pixel value. The object unit image data is smoothed with one of the preceding unit image data and the subsequent unit image data having a smaller difference. Thus, since the object unit image data is always smoothed with the unit image data having the smallest difference, effective noise elimination can be performed, with preventing an adverse effect caused by the smoothing.

## Claims

1.  A smoothing processor (10) of image data comprising:

    a data obtaining unit (12) which obtains the image data (D0) including a plurality of unit image data arranged in time series;
    a determining unit (14) which determines a difference between object unit image data which is subjected to processing and preceding unit image data which is immediately before the object unit image data and a difference between the object unit image data and subsequent unit image data which is immediately after the object unit image data, for a plurality of blocks constituting the unit image data; and
    a smoothing unit (16) which executes smoothing by utilizing the object unit image data and one of the preceding unit image data and the subsequent unit image data having a smaller difference, based on a determination result by the determining unit.

2.  The smoothing processor (10) of the image data according to claim 1, wherein the determining unit (14) comprises:

    a unit which determines, for each of the blocks, whether a combination of the object unit image data and the preceding unit image data and a combination of the object unit image data and the subsequent unit image data have a field configuration or a frame configuration, respectively; and
    a unit which determines one of the preceding unit image data and the subsequent unit image data included in the combination having less blocks determined to have the field configuration, as the unit image data having smaller difference.

3.  The smoothing processor (10) of the image data according to claim 2, wherein the smoothing unit (16) executes smoothing for the block determined to have the frame configuration by using a smoothing filter by a frame unit and executes smoothing for the block determined to have the field configuration by using a smoothing filter by a field unit.

4.  A smoothing processing method of image data comprising:

    a data obtaining step which obtains image data (D0) including a plurality of unit image data arranged in time series;
    a determining step which determines a difference between object unit image data which is subjected to processing and preceding unit image data which is immediately before the object unit image data and a difference between the object unit image data and subsequent unit image data which is immediately after the object unit image data, for a plurality of blocks constituting the unit image data; and

a smoothing step which executes smoothing by utilizing the object unit image data and one of the preceding unit image data and the subsequent unit image data having smaller difference, based on a determination result by the determining process.

5. A computer program comprising code means adapted to perform all the steps of the method of claim 4, when said program is run on a computer.

**Patentansprüche**

1. Vorrichtung zur Bilddatenglättung (10), die umfasst:

   - eine Datenerfassungseinheit (12), die die Bilddaten (D0) erfasst und eine Vielzahl von in einer Zeitreihenfolge geordneten Bilddaten einer Einheit einschließt;
   - eine Bestimmungseinheit (14), die einen Unterschied zwischen Bilddaten einer Objekteinheit, die der Verarbeitung unterworfen werden, und Bilddaten einer vorausgehenden Einheit, die unmittelbar vor den Bilddaten der Objekteinheit liegt, bestimmt und einen Unterschied zwischen den Bilddaten der Objekteinheit und den Bilddaten einer nachfolgenden Einheit, die unmittelbar auf die Bilddaten der Objekteinheit folgt, für eine Vielzahl von Blöcken bestimmt, die die Bilddaten der Einheit darstellen; und
   - eine Glättungseinheit (16), die das Glätten durch Verwendung der Bilddaten der Objekteinheit und der Bilddaten einer vorausgehenden Einheit und der Bilddaten einer nachfolgenden Einheit mit einem kleineren Unterschied auf der Basis eines Bestimmungsergebnisses durch die Bestimmungseinheit ausführt.

2. Vorrichtung zur Bilddatenglättung (10) nach Anspruch 1, wobei die Bestimmungseinheit umfasst:

   - eine Einheit, die für jeden der Blöcke bestimmt, ob eine Kombination der Bilddaten der Objekteinheit und der Bilddaten der vorhergehenden Einheit sowie eine Kombination der Bilddaten der Objekteinheit und der Bilddaten der nachfolgenden Einheit eine Feldkonfiguration oder eine Rahmenkonfiguration haben; und
   - eine Einheit, die Bilddaten einer der vorausgehenden Einheit und der nachfolgenden Einheit, die in der Kombination mit weniger Blöcken eingeschlossen sind, von welchen bestimmt wurde, dass sie die Feldkonfiguration haben, als die Bilddaten der Einheit bestimmt, die einen geringeren Unterschied aufweist.

3. Vorrichtung zur Bilddatenglättung (10) nach Anspruch 2, wobei die Glättungseinheit (16) das Glätten für den Block, von dem bestimmt wurde, dass er die Rahmenkonfiguration hat, durchführt durch Verwendung eines Glättungsfilters durch eine Rahmeneinheit, und wobei die Glättungseinheit das Glätten für den Block, von dem bestimmt wurde, dass er die Feldkonfiguration hat, durchführt unter Verwendung eines Glättungsfilters durch eine Feldeinheit.

4. Verfahren zur Bilddatenglättung, welches umfasst:

   - einen Datenerfassungsschritt, der Bilddaten (D0) erfasst, die eine Vielzahl von in Zeitreihenfolge angeordneten Einheits-Bilddaten einschließen;
   - einen Bestimmungsschritt, der einen Unterschied zwischen den Bilddaten einer Objekteinheit, welche dem Verarbeiten unterworfen ist, und den Bilddaten einer vorausgehenden Einheit bestimmt, welche unmittelbar den Bilddaten der Objekteinheit vorausgehen, und der einen Unterschied zwischen den Bilddaten der Objekteinheit und den Bilddaten einer nachfolgenden Einheit, welche den Bilddaten der Objekteinheit unmittelbar nachfolgen, für eine Vielzahl an Blöcken bestimmt, die die Bilddaten der Einheit bilden; und
   - einen Glättungsschritt, der das Glätten ausführt durch Verwendung der Bilddaten der Objekteinheit und der Bilddaten einer vorausgehenden Einheit und der Bilddaten der nachfolgenden Einheit mit geringerem Unterschied auf der Basis eines Bestimmungsergebnisses durch den Bestimmungsprozess.

5. Computerprogramm, das eine Codeeinrichtung umfasst, die ausgelegt ist, um alle Schritte des Verfahrens von Anspruch 4 durchzuführen, wenn das Programm auf einem Computer abläuft.

**Revendications**

1. Processeur de lissage (10) de données d'image comprenant :

   une unité d'obtention de données (12) qui obtient les données d'image (D0) comprenant une pluralité de données d'image unitaires agencées en série chronologique ;
   une unité de détermination (14) qui détermine une différence entre les données d'image unitaires objets qui sont soumises à un traitement et les données d'image unitaires précédentes qui se trouvent juste avant les données d'image unitaires objets et une différence entre les données d'image unitaires objets et les données d'image unitaires suivantes qui se trouvent juste après les données d'image unitaires objets, pour une pluralité de blocs constituant les données d'image unitaires ; et
   une unité de lissage (16) qui exécute un lissage en utilisant les données d'image unitaires objets et les données d'image unitaires précédentes ou les données d'image unitaires suivantes ayant une plus petite différence, sur la base d'un résultat de détermination obtenu par l'unité de détermination.

2. Processeur de lissage (10) des données d'image selon la revendication 1, dans lequel l'unité de détermination (14) comprend :

   une unité qui détermine, pour chacun des blocs, si une combinaison des données d'image unitaires objets et des données d'image unitaires précédentes et une combinaison des données d'image unitaires objets et des données d'image unitaires suivantes ont une configuration de champ ou une configuration de cadre, respectivement ; et
   une unité qui détermine les données d'image unitaires précédentes et les données d'image unitaires suivantes incluses dans la combinaison ayant moins de blocs déterminés pour avoir la configuration de champ, en tant que données d'image unitaires ayant une plus petite différence.

3. Processeur de lissage (10) des données d'image selon la revendication 2, dans lequel l'unité de lissage (16) exécute un lissage du bloc déterminé pour avoir la configuration de trame en utilisant un filtre de lissage par une unité de cadre et exécute un lissage pour le bloc déterminé pour avoir la configuration de champ en utilisant un filtre de lissage par une unité de champ.

4. Procédé de traitement de lissage de données d'image comprenant :

   une étape d'obtention de données qui obtient des données d'image (D0) comprenant une pluralité de données d'image unitaires agencées en série chronologique ;
   une étape de détermination qui détermine une différence entre les données d'image unitaires objets qui sont soumises à un traitement et les données d'image unitaires précédentes qui se trouvent juste avant les données d'image unitaires objets et une différence entre les données d'image unitaires objets et les données d'image unitaires suivantes qui se trouvent juste après les données d'image unitaires objets, pour une pluralité de blocs constituant les données d'image unitaires ; et
   une étape de lissage qui exécute un lissage en utilisant les données d'image unitaires objets et les données d'image unitaires précédentes ou les données d'image unitaires suivantes ayant une plus petite différence, sur la base d'un résultat de détermination obtenu par le processus de détermination.

5. Programme informatique comprenant un moyen de codage adapté pour effectuer toutes les étapes du procédé de la revendication 4, lorsque ledit programme est exécuté sur un ordinateur.

(TOP FIELD)

**FIG. 1A**

(BOTTOM FIELD)

<SMOOTHING>

(TOP FIELD)

**FIG. 1B**

<SMOOTHING>

(BOTTOM FIELD)

# FIG. 2

10: PREFILTER (SMOOTHING FILTER)

IMAGE
SOURCE
5

D0

MEMORY
(FIELD × 4)
12

OUTPUT
BUFFER
18

SMOOTHING
UNIT
16

FRAME/FIELD
DETERMINATION
UNIT
14

D1

ENCODING UNIT
(MPEG ENCODER)
7

EP 1 427 215 B1

(PROCESSED FRAME)     (PROCESSING FRAME)     (NEXT FRAME)

**FIG. 3A**

| TOP_01 |
|---|
| BOTTOM_01 |

fb1

| TOP_02 |
|---|
| BOTTOM_02 |

fb2

fb3

| TOP_03 |
|---|
| BOTTOM_03 |

**FIG. 3B**

FIELD DETERMINATION
NUMBER
$fb1 = \alpha$

TOP_02

FIELD DETERMINATION
NUMBER
$fb2 = \beta$

·IF $\alpha > \beta$, SMOOTHING PROCESS IS
EXECUTED BY COMBINATION OF TOP_02 &
BOTTOM_02

| BOTTOM_01 |
|---|

| BOTTOM_02 |
|---|

# FIG. 4

FRAME IMAGE
(ex.)TOP_02 & BOTTOM_01

$$CR1 = (A-a)^2+(B-b)^2+ \ldots+(H-h)^2$$

$$CR2 = (a-I)^2+(b-J)^2+ \ldots+(h-P)^2$$

FRAME ACCUMULATION SUM: CR = CR1+CR2+ .... +CR7

EP 1 427 215 B1

## FIG. 5A

$$CT1 = (A-I)^2 + (B-J)^2 + \ldots\ldots + (H-P)^2$$

$$CT2 = (I-Q)^2 + (J-R)^2 + \ldots\ldots + (P-X)^2$$

⟨TOP FIELD ACCUMULATION SUM : CT = CT1+CT2+CT3⟩

## FIG. 5B

$$CB1 = (a-i)^2 + (b-j)^2 + \ldots\ldots + (h-p)^2$$

$$CB2 = (l-q)^2 + (j-r)^2 + \ldots\ldots + (p-x)^2$$

⟨BOTTOM FIELD ACCUMULATION SUM : CB = CB1+CB2+CB3⟩

EP 1 427 215 B1

# FIG. 6

1 BLOCK
(8 × 8 PIXEL)

| FR |

PROCESSING FRAME IMAGE
(ex.)TOP_02 & BOTTOM_02

| FR | FI | FI | FI | FR | · · · | FI | FR |
| FR | FI | FR | FR | FR | · · · | FI | FR |

| FR | FI | FR | FR | FR | · · · | FI | FR |

| FR | BLOCK DETERMINED AS FRAME |

| FI | BLOCK DETERMINED AS FIELD |

EP 1 427 215 B1

FIG. 7A

<SMOOTHING FILTER>

FIG. 7B

<SMOOTHING FILTER>

FIG. 7C

<SMOOTHING FILTER>

PROCESSING IMAGE

〈SOBEL FILTER〉

(VERTICAL DETECTION)    (HORIZONTAL DETECTION)

FIG. 8A

| -1 | 0 | 1 |
|----|---|---|
| -2 | 0 | 2 |
| -1 | 0 | 1 |

| -1 | -2 | -1 |
|----|----|----|
| 0 | 0 | 0 |
| 1 | 2 | 1 |

〈SOBEL FILTER〉

(VERTICAL DETECTION)    (HORIZONTAL DETECTION)

FIG. 8B

| -1 | 0 | 1 |
|----|---|---|
| -2 | 0 | 2 |
| -1 | 0 | 1 |

| -1 | 2 | -1 |
|----|---|----|
| 0 | 0 | 0 |
| 1 | 2 | 1 |

# FIG. 9

```
        ( PREFILTERING )
        (   PROCESS    )
              │
              ▼
S1   ┌─────────────────────────┐
     │   OBTAIN IMAGE DATA      │
     │   FROM IMAGE SOURCE      │
     └─────────────────────────┘
              │
              ▼
S2   ┌─────────────────────────┐
     │  DETERMINE FRAME/FIELD   │
     │     IN EACH BLOCK        │
     │ BY FRAME IMAGE OF COMBINATION A │
     └─────────────────────────┘
              │
              ▼
S3   ┌─────────────────────────┐
     │  DETERMINE FRAME/FIELD   │
     │     IN EACH BLOCK        │
     │ BY FRAME IMAGE OF COMBINATION B │
     └─────────────────────────┘
              │
              ▼
S4        ◇ FIELD DETERMINATION NUMBER ◇
          ◇ COMBINATION A <COMBINATION B ? ◇──── No ───┐
              │                                         │
             Yes                              S6        │
              ▼                                         ▼
S5   ┌─────────────────────┐      ┌─────────────────────────┐
     │  SMOOTHING PROCESS   │      │   SMOOTHING PROCESS      │
     │ BY FRAME OF COMBINATION A │  │  BY FRAME OF COMBINATION B │
     └─────────────────────┘      └─────────────────────────┘
              │◄──────────────────────────────┘
              ▼
S7   ┌─────────────────────────┐
     │ OUTPUT TOP FIELD IMAGE DATA │
     └─────────────────────────┘
              │
              ▼
S8   ┌─────────────────────────┐
     │  DETERMINE FRAME/FIELD   │
     │     IN EACH BLOCK        │
     │ BY FRAME IMAGE OF COMBINATION C │
     └─────────────────────────┘
              │
              ▼
S9        ◇ FIELD DETERMINATION NUMBER ◇── No ──┐
          ◇ COMBINATION B <COMBINATION C ? ◇      │
              │                                    │
             Yes                        S11        │
              ▼                                    ▼
S10  ┌─────────────────────┐      ┌─────────────────────────┐
     │  SMOOTHING PROCESS   │      │   SMOOTHING PROCESS      │
     │ BY FRAME OF COMBINATION B │  │ BY FRAME OF COMBINATION C │
     └─────────────────────┘      └─────────────────────────┘
              │◄──────────────────────────────┘
              ▼
     ┌─────────────────────┐   S12
     │ OUTPUT BOTTOM FIELD  │
     │    IMAGE DATA        │
     └─────────────────────┘
              │
              ▼
   No      ◇ ALL DATA PROCESSED? ◇   S13
   ┌────────◇                   ◇
   │          │
   │         Yes
   │          ▼
   │        (  END  )
   └── (back to S1)
```

# FIG. 10

```
                    ( FRAME/FIELD          )
                    ( DETERMINATION PROCESS )
                              │
        ┌(B)──────────────────┤←─────────────────────────────┐
        │                     ↓                               │
      S20 ┌──────────────────────────────────┐               │
          │      CALCULATE FRAME              │               │
          │      CALCULATION VALUE            │               │
          │  BETWEEN NEIGHBORING LINES        │               │
          │      AND ACCUMULATE               │               │
          └──────────────────────────────────┘               │
                     ↓                                        │
      S21         ◇ COMPLETED ◇          N                    │
              ◇ FOR HORIZONTAL PIXELS? ◇────────────→─────────┤
                     │ Y                                      │
      S22  ┌────────────────────────────┐                     │
           │  SHIFT PROCESS LINE BY ONE  │          (A)       │
           └────────────────────────────┘           ↓        │
                     ↓                  S32  ◇ FIELD DETERMINATION ◇  N
      S23      ◇ COMPLETED ◇      N         ◇ CONDITION SATISFIED? ◇──────┐
           ◇ FOR VERTICAL PIXELS? ◇──→──         │ Y                      │
                     │ Y            S33 ┌──────────────┐  ┌──────────────┐ │
                     ↓                  │  DETERMINE   │  │  DETERMINE   │←┘
      S24 ┌────────────────────┐        │    FIELD     │  │    FRAME     │
          │ CALCULATE TOP FIELD │       └──────────────┘  └──────────────┘
          │ CALCULATION VALUE   │   S35          ↓←────────────┘
          │  AND ACCUMULATE     │      ┌──────────────────────┐
          └────────────────────┘       │  SHIFT PROCESS BLOCK  │
                     ↓                  │       BY ONE          │
      S25      ◇ COMPLETED ◇     N      └──────────────────────┘
          ◇ FOR HORIZONTAL PIXELS? ◇─→        ↓
                     │ Y             S36   ◇ COMPLETED ◇     N
      S26 ┌──────────────────────────┐  ◇ FOR ALL BLOCKS? ◇───→(B)
          │ SHIFT PROCESS LINE BY ONE │         │ Y
          └──────────────────────────┘          ↓
                     ↓                    ( RETURN )
      S27      ◇ COMPLETED ◇      N
          ◇ FOR VERTICAL PIXELS? ◇──→
                     │ Y
                     ↓
      S28 ┌──────────────────────┐
          │ CALCULATE BOTTOM FIELD│
          │ CALCULATION VALUE     │
          │  AND ACCUMULATE       │
          └──────────────────────┘
                     ↓
      S29      ◇ COMPLETED FOR ◇    N
          ◇ HORIZONTAL PIXELS? ◇──→
                     │ Y
      S30 ┌──────────────────────────┐
          │ SHIFT PROCESS LINE BY ONE │
          └──────────────────────────┘
                     ↓
      S31      ◇ COMPLETED ◇      N
          ◇ FOR VERTICAL PIXEL? ◇──→
                     │ Y
                    (A)
```

FRAME ACCUMULATION VALUE CALCULATION

TOP FIELD ACCUMULATION VALUE CALCULATION

BOTTOM FIELD ACCUMULATION VALUE CALCULATION

# FIG. 11

```
         ╭──────────────────────╮
         │  SMOOTHING PROCESS   │
         ╰──────────────────────╯
                    │
    ┌───────────────┤
    │          S41  ◇ IS PIXEL          N
    │         ╱─── IN FRAME BLOCK? ───╲──────────┐
    │                    │                       │
    │                    Y                        │
    │                                      S43    │
    │  S42 ┌──────────────────┐  ┌──────────────────────┐
    │      │ SELECT SMOOTHING │  │ SELECT SMOOTHING     │
    │      │ FILTER FOR FRAME │  │ FILTER FOR FIELD     │
    │      └──────────────────┘  └──────────────────────┘
    │                    │                 │
    │                    ├─────────────────┘
    │                    │
    │  S44 ┌──────────────────┐
    │      │     EXECUTE      │
    │      │  SOBEL FILTERING │
    │      └──────────────────┘
    │                    │
    │  S45         ◇ PIXEL          N
    │         ╱── NOT ON BORDER? ──╲────────┐
    │                    │                   │
    │                    Y                   │
    │  S46 ┌──────────────────┐              │
    │      │     EXECUTE      │              │
    │      │ SMOOTHING FILTERING│            │
    │      └──────────────────┘              │
    │                    │                   │
    │                    ├───────────────────┘
    │                    │
    │  S47 ┌──────────────────┐
    │      │ SHIFT PIXEL BY ONE│
    │      └──────────────────┘
    │                    │
    │   N          ◇ S48
    └──────────── LAST PIXEL?
                         │
                         Y
         ╭──────────────────────╮
         │        RETURN        │
         ╰──────────────────────╯
```

**S41** IS PIXEL IN FRAME BLOCK?

**S42** SELECT SMOOTHING FILTER FOR FRAME

**S43** SELECT SMOOTHING FILTER FOR FIELD

**S44** EXECUTE SOBEL FILTERING

**S45** PIXEL NOT ON BORDER?

**S46** EXECUTE SMOOTHING FILTERING

**S47** SHIFT PIXEL BY ONE

**S48** LAST PIXEL?